# EUROPEAN PATENT APPLICATION

(11) **EP 1 259 034 A2**
(43) Date of publication of application: **20.11.2002**
(21) Application number: 02010161.4
(22) Date of filing: 14.05.2002
(51) Int. Cl.: H04L 12/56, H04Q 11/04

(54) **Determining service outage duration of a data cell stream**

(30) Priority: 15.05.2001 US 858193
(71) Applicant: ALCATEL, 75008 Paris (FR)
(72) Inventor: Foster, Lee E., Raleigh, North Carolina 27615 (US); Grove, Robert M., Raleigh, North Carolina 27613 (US)
(74) Representative: Dreiss, Fuhlendorf, Steimle & Becker

(57) **Abstract**

A method for determining a service outage duration of a cell stream is disclosed herein. The method includes configuring a data trace initiation and monitoring a data cell stream. A data trace including a plurality of chronologically referenced data cells associated with the data cell stream is generated in response to identifying a data cell in the data cell stream conforming to the data trace initiation condition. The chronologically referenced data cells are processed for determining a start-of-outage chronological reference indicator for the data cell stream and an end-of-outage chronological reference indicator for the data cell stream. A difference between the start-of-outage and the end-of-outage chronological reference indicators represents the service outage duration for the data cell stream.

## Description

### FIELD OF THE DISCLOSURE

The disclosures herein relate generally to data cell streams and more particularly to determining a service outage duration of a data cell stream.

### BACKGROUND

To limit the duration of a network service outage, one or more types of protection switching may be used for rerouting network traffic during the network service outage. Depending on the specific application and requirements, redundant equipment, redundant facilities and/or redundant transmission paths may be used for providing protection switching. Regardless of how protection switching is provided, it must be provided in a time-sensitive and reliable manner.

Some network transmission equipment provides protection switching based on redundant transmission paths. When disruption of a transmission path occurs, the network transmission equipment re-routes at least a portion of the network traffic from the disrupted transmission path to an alternate transmission path until service over the disrupted transmission path is restored. In this manner, service is maintained for at least essential or prioritized network traffic.

Many telephony providers are making a transition to Asynchronous Transfer Mode (ATM) network solutions for supporting voice and data transmissions. In general, telephony providers are extremely sensitive to network service outages due to the significant costs and inconveniences associated with service outages. As a result, it is common for telephony providers to require that protection switching occur within a prescribed period of time from when a service outage occurs.

Accordingly, determining the service outage duration of a data cell stream is useful for enabling the protection switching capability of network transmission equipment to be quantitatively assessed.

### BRIEF DESCRIPTION OF THE DRAWINGS

FIG. 1 is a block diagram depicting an embodiment of a data cell.

FIG. 2 is a flow chart view depicting an embodiment of a method for determining a service outage duration of a data cell stream.

FIG. 3 is a flow chart view depicting an embodiment of an operation for generating a data trace.

FIG. 4 is a flow chart view depicting an embodiment of an operation for processing time-stamped data cells.

FIG. 5 is a block diagram depicting an embodiment of an apparatus for determining a service outage duration of a data cell stream

### DETAILED DESCRIPTION OF THE DISCLOSURE

A method, apparatus and data processor program product for determining a service outage duration of a data cell stream is disclosed herein. The duration of time that is required for implementing a protection switching solution in a communication network is one measure of performance for various network elements such as an Add-Drop Multiplexor (ADM). Because service outages are very costly to a service provider, a simple yet effective means of determining the duration of time for a network element to implement protection switching functionality is useful.

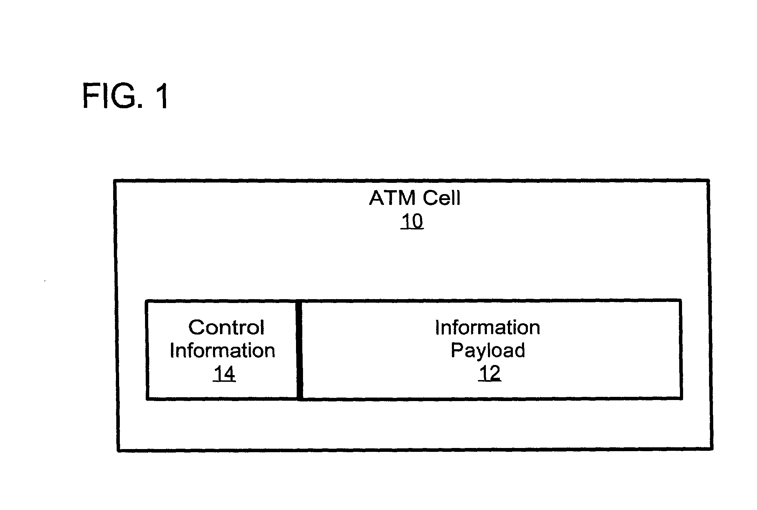

As depicted in FIG. 1, a data cell 10 includes information payload portion 12 for carrying user information and a control information portion 14 for carrying network control and routing information. The information payload portion 12 and the control information portion 14 are examples of data cell information blocks. A stream of ATM cells is one example of a stream of data cells. It is contemplated that the methods, apparatus and data processor program product disclosed herein may be used for determining a service outage duration of other types of data cell streams besides ATM cell streams.

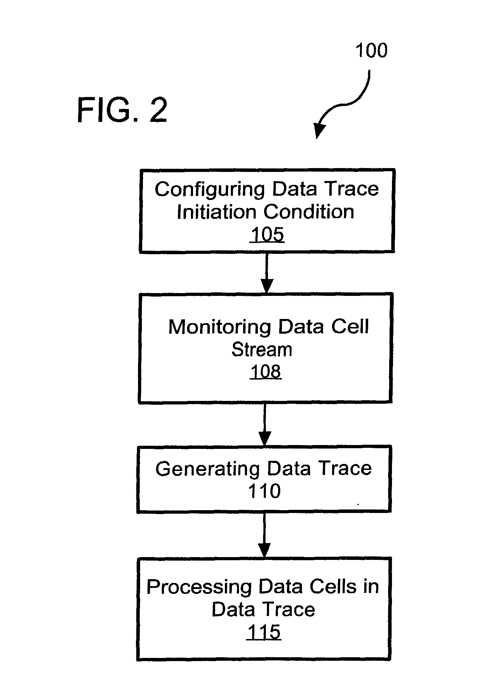

An embodiment of a method 100 for determining a service outage duration of a cell stream, such as an ATM cell stream, is depicted in FIG. 2. An operation 105 of configuring a data trace initiation condition is performed. The operation 105 defines the condition (or conditions) at which generation of the data trace is initiated. Once a data cell of the data cell stream is identified that conforms to the data trace initiation condition, data cells of the data cell stream or streams begin being captured for subsequent determination of a service outage duration. In one embodiment of the operation 105, an information payload of a data cell that deviates from an expected information payload for a data cells in the data cell stream initiates the data trace being generated. In another embodiment of the operation 105, deviation from expected routing information of the data cell initiates the data trace being generated. A data cell that does not conform to the data trace initiation condition is referred to herein as a data cell having a known-good condition.

After the operation 105 is performed and in response to performing an operation 108 for monitoring one data cell stream or more than one data cell streams, an operation 110 is performed for generating the data trace. The data trace includes a plurality of time-stamped data cells. The data cells are captured from a network including a network element, such as an Add-Drop Multiplexor (ADM), that is being evaluated for protection switching performance. The length of the data trace may be limited by available memory of a test system, by a specified period of time or any other limiting factor. In at least one embodiment of the data trace, the data trace includes data cells corresponding to a plurality of data cell streams.

After at least a portion of the data trace is generated, an operation 115 for processing time-stamped data cells is performed. As mentioned above, the data trace may include data cells corresponding to two or more data cell streams. In such instances, the operation 115 is performed for determining the service outage duration of each of the data cell streams in the data trace. In at least one embodiment of the operation 115, the operation 115 is facilitated using a data processing system including a data tabulation program capable of processing the captured time-stamped data cells for determining a service outage duration. A computer workstation and a UNIX script program (AWK) are examples of the data processing device and the data tabulation data processor program, respectively.

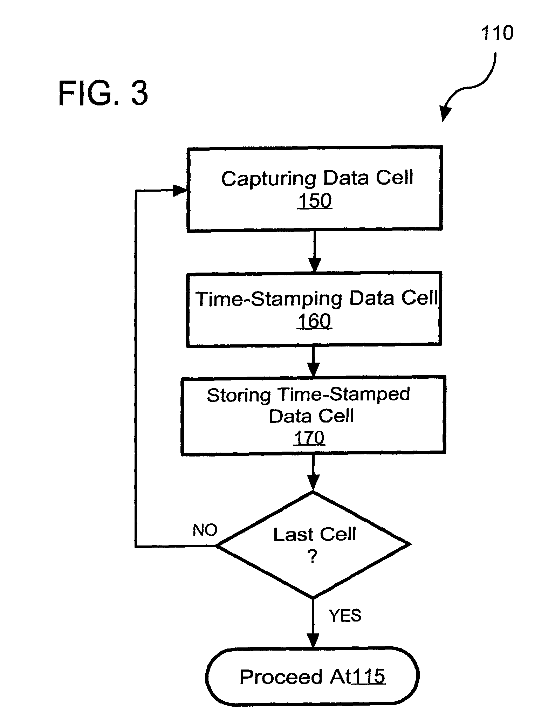

An embodiment of the operation 110 is depicted in FIG. 3. A step 150 for capturing a data cell is performed. After performing the step 150, a step 160 for time-stamping the data cell is performed. Time-stamping time is one example of a technique for chronologically referencing a data cell. In one embodiment of the step 160, time-stamping of the data cells is facilitated by a broadband series test system. After the step 160 is performed, a step 170 is performed for storing each data cell. In one embodiment of the step 170, the data cell is stored in a buffer. The steps 150 -170 are repeated for each data cell in the data trace until the last cell in the data trace is processed.

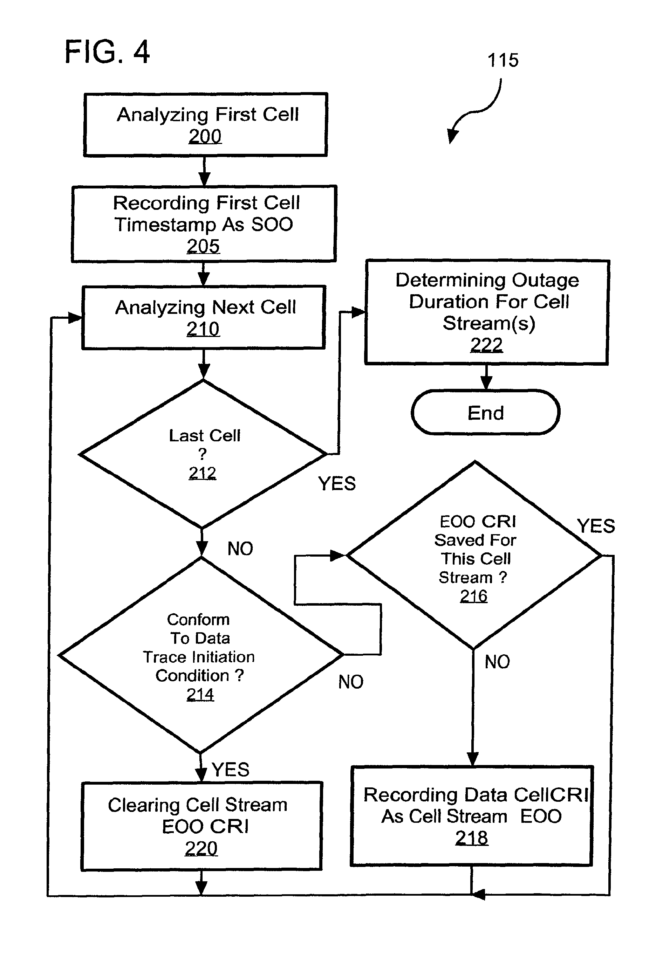

An embodiment of the operation 115 is depicted in FIG. 4. A step 200 for analyzing a first data cell is performed. In at least one embodiment of the step 200, the step 200 includes retrieving the first data cell from a storage device and determining a time-stamp associated with the first cell. A buffer, a data storage unit, a compact disk and the like are examples of the storage device.

In response to performing the step 200, a step 205 for recording the time-stamp of the first data cell is performed. Saving the time-stamp, such as in a buffer, is one example of recording the time-stamp. The time-stamp of the first data cell represents a Start-Of-Outage (SOO) chronological reference indicator for the data cell stream. As mentioned above, the time-stamp is one example of a technique for sequentially referencing a data cell of a data cell stream. The time-stamp may be a time-of-day (hours, minutes, seconds, fractions of seconds), an elapsed time relative to a start time, or any other suitable reference time for determining a service outage duration.

After the step 205 is performed, a step 210 is performed for analyzing a next data cell to be processed. In at least one embodiment of the step 210, the step 210 includes retrieving the next data cell to be processed from a storage device and determining the time-stamp of the next data cell to be processed. A buffer, a data storage unit, a compact disk and the like are examples of the storage device. After the next data cell to be processed is analyzed, the next data cell to be processed is referred to herein as the current data cell.

In response to performing the step 210, a step 212 for determining if the current data cell is the last data cell in the data trace. If the current data cell is not the last cell in the data trace, the operation proceeds to a step 214. The step 214 is for determining if the data cell conforms to the data trace initiation condition that was configured at the operation 105.

If the current data cell not conforms to the data trace initiation condition, the operation proceeds from the step 214 to at a step 216. The step 216 is performed for determining if an End-Of-Outage) EOO time-stamp is saved for the data cell stream associated with the current data cell. The EOO time-stamp is an example of an EOO chronological reference indicator. If the EOO time-stamp is saved for the data cell stream associated with the current data cell, the operation continues at the step 210. In this case, the operation assumes that the cell stream service is at least temporarily restored and will continue processing cells to ensure service is restored for the remainder of the data trace and to determine the EOO time-stamp for any other data cell streams.

If the EOO time-stamp is not saved for the data cell stream associated with the current data cell, the operation 115 continues at a step 218. The step 218 is performed for recording the time-stamp of the current data cell as the EOO for the data cell stream associated with the current data cell. Saving the time-stamp, such as in a buffer, is one example of recording the time-stamp. After performing the step 218, the operation 115 continues at the step 210. The steps 212-220 jointly define an operation for determining an EOO chronological reference indicator for the data cell stream.

If the current data cell doe conform to the data trace initiation condition, the operation proceeds from the step 214 to a step 220. The step 220 is performed for clearing an End-Of-Outage (EOO) time-stamp for the data cell stream associated with the current data cell, providing an EOO time-stamp for the data cell stream associated with the current data cell was saved. Such a case would exist if cell stream service was restored only temporarily or partially during the data trace. After the step 220 is performed, the operation 115 continues at the step 210 where the next data cell to be processed is analyzed.

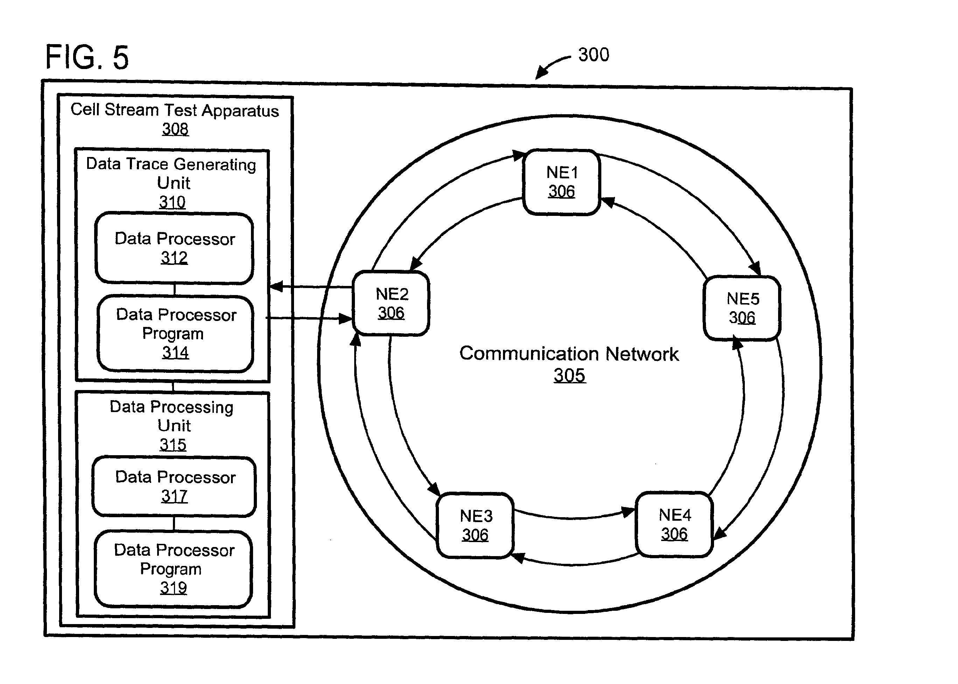

If the current data cell is the last cell in the data trace, the operation ends after a step 222 is performed for determining the service outage duration of each of the data cell streams captured in the data trace. In at least one embodiment of the step 222, the step 222 includes calculating a difference between the EOO time-stamp and the SOO time-stamp for all recorded data streams.
An embodiment of an apparatus 300 for determining a service outage duration of a data cell stream, such as an ATM cell stream, is depicted in FIG. 5. The apparatus 300 includes a communication network 305 and a data cell stream (DCS) test system 308 connected to the communication network 305. The DCS test system 308 includes a data trace generation (DTG) unit 310 and a data processing unit 315. The communication network 305 includes a plurality of network elements 306 connected in a manner for providing unidirectional-path switched transmit and receive rings. A 1603SM Series Add-Drop Multiplexor offered by ALCATEL Network Systems is an example of the network elements 306.

The DTG unit 310 is connected to the communication network 305 via one of the network elements 306. The DTG unit 310 includes a data processor 312 and a data processor program 314 processible by the data processor 312 for enabling at least a portion of the operation facilitated by the DTG Unit 310 to be performed. In at least one embodiment of the DTG test system 310, the DTG unit 310 is capable of generating data cells of a system-defined content for routing to the communication network 305, triggering a data trace upon receiving a cell having an unexpected/unknown content, capturing the data cells after being routed through communication network 305, time-stamping the captured data cells, recording capture times for cell streams of the data trace in a data file and downloading time-stamp information to the data processing system 315. The Broadband Series Test System offered by Agilient Technologies is one example the DTG unit 310.

The data processing unit (DP) unit 315 is connected to the DTG unit 310 for facilitating processing of data cell information to determine the service outage duration of a data cell stream. In at least one embodiment of the DP unit 315, the DP unit 315 is capable of facilitating the operation 115 depicted in FIG. 4. The DP unit 315 includes a data processor 317 and a data processor program 319 processible by the data processor 317 for enabling at least a portion of the operation facilitated by the DP unit 315 to be performed.

In at least one embodiment of the data processor programs 314, 319, the data processor programs of the ACS test system 310 and the data processing system 315 are each accessible by the corresponding data processor 314, 317 from an respective apparatus such as a diskette, a compact disk, a network storage device or other suitable apparatus. A data processor program accessible from an apparatus by a data processor is defined herein as a data processor program product. The term data processor program is defined herein to refer to computer software, data processor algorithms or any other type of instruction code capable of controlling operations associated with a data processor.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical, chemical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A method for determining a service outage duration of a cell stream, comprising:
configuring a data trace initiation;
monitoring a data cell stream;
generating a data trace including a plurality of chronologically referenced data cells associated with the data cell stream in response to identifying a data cell in the data cell stream conforming to the data trace initiation condition; and
processing said chronologically referenced data cells for determining a start-of-outage chronological reference indicator for the data cell stream and an end-of-outage chronological reference indicator for the data cell stream.

2. The method of claim 1 wherein configuring the data trace initiation condition includes defining expected information carried in a data cell information block of data cells in the data cell stream.

3. The method of claim 2 wherein identifying the data cell in the data cell stream conforming to the data trace initiation condition includes identifying a data cell including a data cell information block having information therein that deviates from said expected information.

4. The method of claim 3 wherein identifying a data cell including a data cell information block including information therein that deviates from said expected information includes identifying a data cell including an information payload in an information payload portion thereof that deviates from an expected information for data cells in the data stream.

5. The method of claim 3 wherein identifying a data cell including a data cell information block including information therein that deviates from said expected information includes identifying a data cell including control information in a control information portion thereof that deviates from an expected information for data cells in the data stream.

6. The method of claim 1 wherein generating the data trace includes:
capturing a plurality of said data cells;
chronologically referencing each one of said data cells for creating the plurality of said chronologically referenced data cells; and
storing each one of said chronologically referenced data cells.

7. The method of claim 6 wherein chronologically referencing each one of said data cells includes time-stamping each one of said data cells.

8. The method of claim 1 wherein processing said chronologically referenced data cells for determining a start-of-outage chronological reference indicator for the data cell stream includes:
analyzing a first one of said data cells; and
recording a time-stamp of the first one of said data cells as the start-of-outage chronological reference indicator.

9. The method of claim 1 wherein processing said chronologically referenced data cells for determining an end-of-outage chronological reference indicator for the data cell stream includes:
analyzing a next one of said data cells wherein the next one of said data cells becomes a current data cell in the data trace after being analyzed;
recording a time-stamp of the current data cell as the end-of-outage chronological reference indicator in response to the current data cell conforming to a known-good condition for data cells in the data stream and if the end-of-outage chronological reference indicator has not been previously saved for the data cell stream; and
analyzing an other next one of said data cells recording a time-stamp of the current data cell as the end-of-outage chronological reference indicator in response to recording a time-stamp of the current data cell.

10. The method of claim 9, further comprising:
analyzing an other next one of said data cells recording a time-stamp of the current data cell as the end-of-outage chronological reference indicator in response to the current data cell conforming to the known-good condition for data cells in the data stream and if the end-of-outage chronological reference indicator has been previously saved for the data cell stream.

11. The method of claim 9, further comprising:
clearing a previously saved end-of-outage chronological reference indicator in response to the current data cell conforming to the data trace initiation condition.

12. The method of claim 9 wherein the current data cell conforming to the data trace initiation condition includes the current data cell including an information payload in an information payload portion thereof that deviates from an expected information payload for data cells in the data stream.

13. The method of claim 9 wherein the current data cell conforming to the data trace initiation condition includes the current data cell including control information in a control information portion thereof that deviates from an expected control information for data cells in the data stream.

14. The method of claim 1, further comprising:
determining calculating a difference between the end-of-outage chronological reference indicator and the start-of-outage chronological reference indicator in response to the next data cell being a last one of the data cell in the data trace.
